# EUROPEAN PATENT SPECIFICATION

(11) **EP 3 974 256 B1**
(45) Date of publication and mention of the grant of the patent: **20.12.2023**
(21) Application number: 19934634.7
(22) Date of filing: 23.12.2019
(51) Int. Cl.: B60R 7/04, B65D 43/16, E05D 1/00, E06B 3/50, E05C 19/12

(54) **BIDIRECTIONAL OPENING/CLOSING DEVICE, AND ARMREST BOX AND VEHICLE**
BIDIREKTIONALE ÖFFNUNGS- /SCHLIESSVORRICHTUNG SOWIE ARMLEHNENBOX UND FAHRZEUG
DISPOSITIF D'OUVERTURE/DE FERMETURE BIDIRECTIONNELLE ET BOÎTE D'ACCOUDOIR ET VÉHICULE

(30) Priority: 27.06.2019 CN 201910569239
(43) Date of publication of application: 30.03.2022
(73) Proprietor: Great Wall Motor Company Limited, Baoding, Hebei 071000 (CN)
(72) Inventor: HU, Jianguang, Baoding, Hebei 071000 (CN); SUN, Qiang, Baoding, Hebei 071000 (CN); LI, Fenghui, Baoding, Hebei 071000 (CN); YU, Yong, Baoding, Hebei 071000 (CN); WANG, Caifang, Baoding, Hebei 071000 (CN)
(74) Representative: Klunker IP Patentanwälte PartG mbB
(86) International application number: PCT/CN2019/127507
(87) International publication number: WO 2020/258781

(56) References cited:
- WO-A1-2013/190561
- CN-A- 101 400 870
- CN-A- 111 251 959
- JP-A- 2019 073 187
- JP-B2- 3 806 690

## Description

### TECHNICALFIELD

The disclosure relates to the technical field of vehicles, in particular to an armrest box and a vehicle.

### BACKGROUND

Most of existing vehicle armrest boxes have a storage function, some are even equipped with functions such as freezing and heating, and the existing vehicle armrest boxes are more and more ingenious in structural design. They are capable of meeting the storage requirement of large capacity, and are very convenient in use portability.

CN 101 400 870 A discloses a two hood-opening device comprising a main body of lid and a connecting rod body. JP 2019 073187 A discloses a vehicle console lid structure excellent in the opening and closing operability of the lid. CN 101 400 870 A discloses in particular an armrest box according to the preamble of claim 1.

However, the inventor of the disclosure has studied the structure of the existing vehicle armrest boxes and found that most of the existing vehicle armrest boxes are still opened in a single front-back direction, which cannot meet the requirements of a passenger in rear row for storing and taking out an object.

### SUMMARY

In view of this, the disclosure aims to provide a bidirectional opening/closing device which is able to realize bidirectional opening/closing. When the bidirectional opening/closing device is applied to an armrest box of a vehicle, it is capable of meeting the requirements of a passenger in a rear row for storing and taking out an object.

To achieve the above objective, the technical solution of the disclosure is realized by providing an armrest box according to the independent claim 1. Further embodiments are specified in the dependent claims.

A bidirectional opening/closing device, including a base, a plate, a trigger mechanism and two locking mechanisms. Each locking mechanism includes a lock arm with a hinged end and a free end, the lock arm is installed on the base by means of the hinged end, the lock arm and the base are capable of being locked or unlocked, and the lock arm is capable of rotating around the hinged end when the lock arm and the base are unlocked; the two lock arms are arranged symmetrically and in parallel, and the free ends of the two lock arms face opposite directions, such that the two lock arms have opposite directions of rotation; and the trigger mechanism is installed on the plate, and the trigger mechanism is capable of selectively unlock one of the lock arms from the base, such that the lock arm is capable of driving the plate to rotate around the hinged end of the lock arm.

According to the invention each locking mechanism includes a lock hook, one end of the lock hook is installed in a cavity of the lock arm, and the other end extends out of the lock arm to be matched with a locking part of the base; and the trigger mechanism includes a trigger lever, the trigger lever is installed on the plate, and the trigger lever is capable of moving in a first direction to extend into the cavity of the lock arm so as to drive the lock hook to be separated from locking part.

Optionally, the trigger mechanism includes a switch lever installed on the plate, the switch lever is provided with a guide groove, the trigger lever is provided with a convex column adapted to the guide groove, and the switch lever is capable of moving and driving the trigger lever to move in the first direction.

According to the invention the trigger lever has a step part, the trigger mechanism includes a stopping unit, and the stopping unit has a stopping end that is capable of abutting against the step part.

Optionally, the stopping unit includes a stopping piece, the stopping piece has the stopping end, and the stopping piece is hinged to the plate and is capable of rotating around a second direction perpendicular to the first direction so as to abut against or be separated from the step part of the trigger lever.

Optionally, the lock hook is hinged to the lock arm so that when the trigger lever pushes one end of the lock hook, the other end of the lock hook is separated from the locking part; and/or, the plate includes a limiting structure configured to guide the trigger lever to move in the first direction.

Optionally, the free end of each locking mechanism is hinged to the plate through a pin shaft.

Compared with the prior art, the bidirectional opening/closing device described by the disclosure has the following advantages:

Because the two lock arms are arranged symmetrically and in parallel, and the free ends of the two lock arms face opposite directions, the rotation directions of the two lock arms are opposite to each other. Thus, when one of the lock arms and the base are unlocked, the lock arm is able to drive the plate to rotate around the hinged end of the lock arm, and when the other lock arm and the base are unlocked, the other lock arm is able to drive the plate to rotate around the hinged end of the other lock arm, so the plate is able to selectively rotate in one of the two opposite directions, thus realizing a bidirectional opening/closing function of the plate relative to the base.

The disclosure provides an armrest box. The armrest box includes a box body, a box cover and the above bidirectional opening/closing device. The base is arranged on the box body, and the box cover is arranged on the plate.

Optionally, the box body is the base, and the box cover is the plate.

The disclosure further provides a vehicle. The vehicle is provided with the above armrest box.

The armrest box and the vehicle have the same advantages as the above bidirectional opening/closing device compared with the prior art, and repeated description will not be made here.

Other features and advantages of the disclosure will be described in detail in the subsequent detailed description part.

### BRIEF DESCRIPTION OF THE DRAWINGS

The accompanying drawings, which constitute a part of this specification, are used for providing a further understanding of the disclosure. Illustrative implementations of the disclosure and their description are used for explaining the disclosure, and do not constitute improper limitation to the disclosure. In the drawings:
Fig. 1 is a schematic structural diagram of one implementation of an armrest box of the disclosure;
Fig. 2 is a side view of a bidirectional opening/closing device of the disclosure;
Fig. 3 is an enlarged view of part A in Fig. 2;
Fig. 4 is a top view of a bidirectional opening/closing device of the disclosure; and
Fig. 5 is a schematic diagram of working principles of a trigger mechanism of a bidirectional opening/closing device of the disclosure.

### Description of reference signs:

100-base, 101-locking part, 200-plate, 201-limiting structure, 300-trigger mechanism, 301-trigger lever, 3011-convex column, 3012-step part, 302-switch lever, 3021-guide groove, 3022-V-shaped groove, 303-moving piece, 3031-tip, 304-reset spring, 305-stopping piece, 3051-stopping end, 3052-action end, 306-stopping torsion spring, 400-locking mechanism, 401-hinged end, 402-free end, 403-lock arm, 404-lock hook, 405-locking torsion spring, 501-pin shaft, 502-booster torsion spring, 503-damper

### DETAILED DESCRIPTION

It should be noted that the implementations of the disclosure and the features of the implementations are able to be combined with each other in case of no conflict.

The disclosure will be described in detail below with reference to the drawings and in conjunction with the implementations.

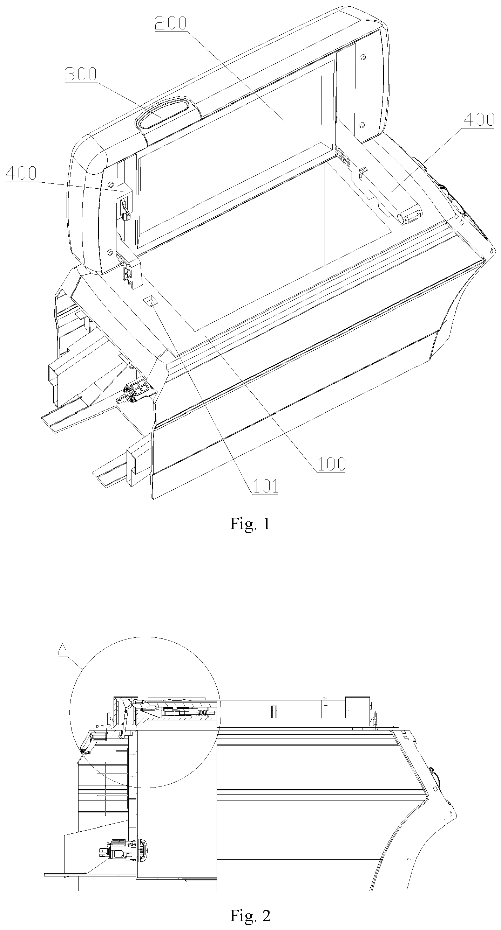

As shown in Figs. 1-5, a bidirectional opening/closing device of the disclosure includes a base 100, a plate 200, a trigger mechanism 300 and two locking mechanisms 400; each locking mechanism 400 includes a lock arm 403 with a hinged end 401 and a free end 402, the lock arms 403 are installed on the base 100 by means of the hinge ends 401, the lock arms 403 and the base 100 are capable of being locked or unlocked, and the lock arm 403 is capable of rotating around the corresponding hinged end 401 when the lock arm 403 and the base 100 are unlocked; the two lock arms 403 are arranged symmetrically and in parallel, and the free ends 402 of the two lock arms 403 face opposite directions, such that the two lock arms 403 have opposite directions of rotation; and the trigger mechanism 300 is installed on the plate 200, and the trigger mechanism 300 is capable of selectively unlock one of the lock arms 403 from the base 100, such that the lock arm 403 is capable of driving the plate 200 to rotate around the hinged end 401 of the lock arm 403.

In the above technical solution, because the two lock arms 403 are arranged symmetrically and in parallel, and the free ends 402 of the two lock arms 403 face opposite directions, the rotation directions of the two lock arms 403 are opposite to each other. Therefore, when one of the lock arms 403 and the base 100 are unlocked, the lock arm 403 is able to drive the plate 200 to rotate around the hinged end 401 of the lock arm 403, and when the other lock arm 403 and the base 100 are unlocked, the other lock arm 403 is able to drive the plate 200 to rotate around the hinged end 401 of the other lock arm 403, so the plate 200 is capable of selectively rotate in one of the two opposite directions, thus realizing a bidirectional opening/closing function of the plate 200 relative to the base 100.

The disclosure realizes a bidirectional rotation function of the plate 200 by arranging the two lock arms 403 (for convenience of explaining, the two locking mechanisms 400 are divided into a first locking mechanism and a second locking mechanism below, and correspondingly, other components of the two locking mechanisms 400 are distinguished by first and second, for example, the two lock arms 403 are divided into a first lock arm and a second lock arm as well) which have different rotation directions and by selectively selecting the two lock arms 403 and the plate 200. It should be understood that various structures may be adopted to realize matching of the above lock arms 403 and the plate 200. For example, the plate 200 may be connected to the two lock arms 403 through a first lever and a second lever respectively. When the trigger mechanism 300 makes the plate 200 to be connected to the first lock arm by the first lever, the trigger mechanism 300 simultaneously makes the plate 200 to be disconnected from the second lock arm while the first lock arm is simultaneously unlocked from the base 100, so the plate 200 is able to be driven by the first lock arm to rotate. Otherwise, when the plate 200 is connected to the second lock arm through the second lever, similarly, the plate 200 will not be connected to the first lock arm by the first lever, so the plate 200 is able to be driven by the second lock arm to rotate.

It should be noted that, in the disclosure, in order to ensure rotating angles of the plate 200, when the plate 200 is connected to one of the two lock arms 403, it should be kept disconnected from the other one. Connection relations and working processes below are explained based on this premise.

In one example of the disclosure, in order to improve the convenience in selectively connecting the plate 200 to one of the two lock arms 403, optionally, each locking mechanism 400 includes a lock hook 404, one end of the lock hook 404 is installed in a cavity of the lock arm 403, and the other end extends out of the lock arm 403 to be matched with a locking part 101 of the base 100; and the trigger mechanism 301 includes a trigger lever 301, the trigger lever 301 is installed on the plate 200, and the trigger lever 301 is able to move in a first direction (in Figs. 1-5, a left side is front, a right side is back, a direction facing an observer along a paper surface is left, and a direction away from the observer along the paper surface is right, so the first direction is a front-back direction in the drawings) to extend into the cavity of the lock arm 403 so as to drive the lock hook 404 to be separated from locking part 101.

Specifically speaking, when the trigger lever 301 moves forward in the first direction, a front end of the trigger lever 301 extends into a cavity of the first lock arm to drive a first lock hook to be separated from the locking part 101. At the moment, since the front end of the trigger lever 301 is constantly located in the cavity of the first lock arm, when the first lock arm rotates, it is able to drive the trigger lever 301 follow to rotate, so the plate 200 connected with the trigger lever 301 also follow to rotate. along with it. Otherwise, when the trigger lever 301 moves backward, a rear end of the trigger lever 301 extends into a cavity of the second lock arm, and other actions will not be repeatedly described here. It can be seen that in the example, the plate 200 is capable of being selectively connected to one of the two lock arms 403 merely by one trigger lever 301, so the convenience of operation is greatly improved.

It can be understood that, in order to make the trigger lever 301 to smoothly extend into the cavities of the lock arms 403, the lock arms 403 may be provided with through holes allowing the ends of the trigger lever 301 to extend into the cavities.

In other to facilitate a user to control the movement of the trigger lever 301, optionally, the trigger mechanism 300 includes a switch lever 302 installed on the plate 200. The switch lever 302 is provided with a guide groove 3021, the trigger lever 301 is provided with a convex column 3011 that is adapted to the guide groove 3021, and the switch lever 302 is able to move and drive the trigger lever 301 to move in the first direction.

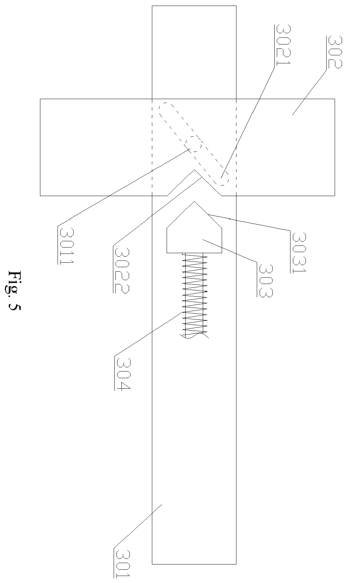

It should be understood that, the switch lever 302 may adopt various structures, as long as it can control the convex column 3011 of the trigger lever 301 through the guide groove 3021 to realize the movement of the trigger lever 301. In one example of the disclosure, in order to make the user control front-back movement of the trigger lever 301 merely through one switch lever 302, optionally, the switch lever 302 is arranged in a second direction (i.e. a left-right direction in the drawings) perpendicular to the first direction, and the guide groove 3021 is arranged at 45 degrees relative to both the first direction and the second direction. In this way, as shown in Fig. 5, when the user pushes the switch lever 302 from left to right, the trigger lever 301 will move forward under matching between the guide groove 3021 and the convex column 3011, so that the front end of the trigger lever 301 extends into the cavity of the first lock arm; and when the user pushes the switch lever 302 from right to left, the trigger lever 301 will move backward under matching between the guide groove 3021 and the convex column 3011, so that the rear end of the trigger lever 301 extends into the cavity of the second lock arm.

In order to ensure that the trigger lever 301 is capable of only moving in the first direction and not moving in other directions, optionally, the plate 200 includes a limiting structure 201 configured to guide the trigger lever 301 to move in the first direction. The limiting structure 201 may be a structure similar to a guide rail arranged along the first direction, so that the trigger lever is capable of only moving in the first direction.

After the user pushes the switch lever 302 once, if the switch lever 302 maintains a current state, it is not conducive for the user to push the switch lever 302 again in subsequent use, so the switch lever 302 and the trigger lever 301 need to be able to automatically return to an initial state (a state where the switch lever 302 does not apply force to the trigger lever 301), i.e. reset, so as to facilitate subsequent use of the user. Thus, optionally, the trigger mechanism 300 includes a reset unit, the reset unit is installed on the plate 200 and includes a moving piece 303 that is capable of moving in the first direction, and the moving piece 303 is able to drive the switch lever 302 and the trigger lever 301 to reset.

It should be understood that, the moving piece 303 may be matched with the switch lever 302 and the trigger lever 301 in various manners. In some examples of the disclosure, as shown in Fig. 5, optionally, one end of the moving piece 303 has a triangular tip 3031, the switch lever 302 is provided with a V-shaped groove 3022 matched with the tip 3031 in shape, and an outer wall of the tip 3031 is able to act on an inner wall of the V-shaped groove 3022 to drive the switch lever 302 to move in the second direction. That is, when the moving piece 303 moves forward in the first direction, outer walls on a left side and a right side of the tip 3031 of the moving piece 303 is able to respectively push inner walls on a left side and a right side of the V-shaped grove 3022 of the switch lever 302, thereby making the switch lever 302 to move in the second direction. Similarly, in order to ensure a moving track of the switch lever 302, a limiting structure configured to guide the switch lever 302 to move in the second direction may be arranged on the plate 200 to restrict the switch lever 302 to only move in the second direction.

When the user pushes the switch lever 302, it is undesirable that the moving piece 303 prevents the movement of the switch lever 302. Thus, optionally, the moving piece 303 has a lever part, the reset unit includes a reset spring 304 that sleeves on the lever part, one end of the reset spring 304 abuts against the plate 200, and the other end abuts against the tip 3031 to push the tip 3031 to move towards the V-shaped groove 3022. That is, when the user pushes the switch lever 302, the movement of the switch lever 302 will make the moving piece 303 press the reset spring 304, and when the user withdraws force applied to the switch lever 302, the moving piece 303 will move forward under an elasticity force of the reset spring 304 so as to drive the switch lever 302 to reset.

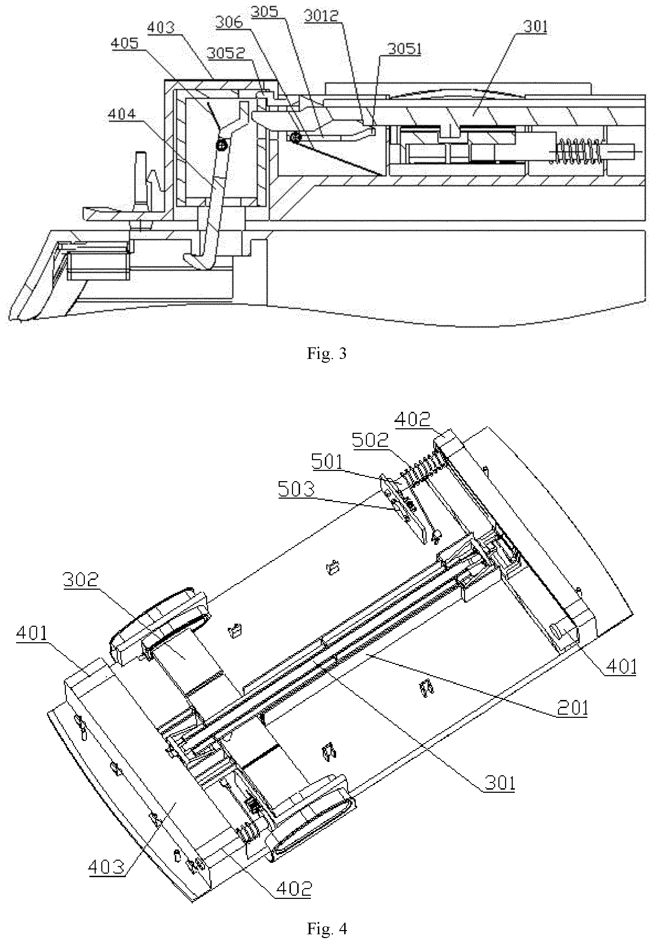

When the plate 200 is in an open sate relative to the base 100, at this moment, the user wants that the trigger lever 301 will not be made to reset even if the force applied to the switch lever 302 is withdrawn, and at the same time, does not want that the trigger lever 301 is made to move in an opposite direction due to misoperation of the user in pushing the switch lever 302 towards the opposite direction. Thus, as shown in Fig. 3, optionally, the trigger lever 301 has a step part 3012, the trigger mechanism 300 includes a stopping unit, and the stopping unit has a stopping end 3051 that is able to abut against the step part 3012 to limit the trigger lever 301 from moving. When one end of the trigger lever 301 extends into the cavity of one lock arm in a certain direction, the stopping end 3051 of the stopping unit is able to clamp the step part 3012 of the trigger lever 301 to limit the trigger lever 301 to move in the opposite direction.

In particular, the stopping unit includes a stopping piece 305, the stopping piece 305 has the stopping end 3051, and the stopping piece 305 is hinged to the plate 200 and is able to rotate around the second direction perpendicular to the first direction so as to abut against or be separated from the step part 3012 of the trigger lever 301. For example, when the trigger lever 301 moves backward for a certain distance, the step part 3012 is made to move to a back side of the stopping end 3051, the stopping piece 305 is then controlled to rotate around the second direction (i.e. a direction perpendicular to the paper surface) to enable the stopping end 3051 to abut against the trigger lever 301, and thus, if the trigger lever 301 tends to move forward, it will be limited because the step part 3012 abuts against the stopping end 3051.

Further, in order to improve the degree of automation of the bidirectional opening/closing device, and realize that the above work of limiting the trigger lever 301 from moving is automatically triggered as much as possible, optionally, the stopping unit includes a stopping torsion spring 306 sleeved on the stopping piece 305, and the stopping torsion spring 306 is configured to drive the stopping end 3051 of the stopping piece 305 to move towards the step part 3012 of the trigger lever 301. As shown in Fig. 3, when the trigger lever 301 does not move, the step part 3012 at a front end thereof is located in front of the stopping end 3051, and under an effect of the stopping torsion spring 306, the stopping piece 305 makes the stopping end 3051 abut against a lower side of the step part 3012; and when the trigger lever moves backward until the step part 3012 is located behind the stopping end 3051, the stopping piece 305 rotates under the effect of the stopping torsion spring 306 to make the stopping end 3051 move upward and abut against a region in front of the step part 3012 of the trigger lever 301.

When the plate 200 is closed relative to the base 100, the switch lever 302 and the trigger lever 301 both need to reset. Thus, when the plate 200 is closed relative to the base 100, the stopping piece 305 is not able to further limit the trigger lever 301 from moving. In order to achieve the objective, optionally, the stopping piece 305 has an action end 3052, the lock arms 403 of the locking mechanism 400 have a matching part matched with the action end 3052, and the matching part is able to push the action end 3052 to make the stopping end 3051 of the stopping piece 305 to move towards a direction away from the step part 3012 of the trigger lever 301. Matching work between the action end 3052 and the matching part is described with reference to Fig. 3: when the stopping piece 305 is in a state of limiting the trigger lever 301 from moving, the moving piece 305 rotates around the stopping torsion spring 306, its stopping end 3051 rotates upward, and correspondingly its action end 3052 rotates downward; and at the moment, the stopping piece 305 is able to be made to rotate around the stopping torsion spring 306 in an opposite direction only by applying an upward force to the action end 3052, so that the stopping end 3051 is separated from the step part 3012 of the trigger lever 301, and the stopping piece 305 no longer limits the movement of the trigger lever 301, and thus, the trigger lever 301 may reset under an effect of the reset unit. When the plate 200 rotates towards the base 100, the plate 200 may drive the stopping piece 305 to move downward, i.e. move towards the locking mechanism 400 locked on the base 100, so when the action end 3052 is in contact with the matching part of the lock arm 403 of the locking mechanism 400, the action end 3052 is under the upward force applied by the matching part thereto, thus making the stopping end 3051 to be separated from the step part 3012 of the trigger lever 301. The user does not need to control throughout the process, and the user is able to achieve the above function only by closing the plate 200 relative to the base 100, so there is a high degree of automation.

In order to unlock the corresponding lock arm 403 when the trigger lever 301 act on the lock hook 404, optionally, the lock hook 404 is hinged to the lock arm 403 so as to make the other end of the lock hook 404 to be separated from the locking part 101 when the trigger lever 301 pushes one end of the lock hook 404.

In particular, the locking mechanism 400 includes a locking torsion spring 405 sleeved on the lock hook 404, and the locking torsion spring 405 is configured to drive the other end of the lock hook 404 to move towards the locking part 101. For example, with reference to Fig. 3, when the trigger lever 301 moves forward, the front end of the trigger lever 301 pushes an upper end of the lock hook 404, and the lock hook 404 rotate anticlockwise around the locking torsion spring 405, so a lower end of the lock hook 404 is able to be separated from the locking part 101.

It can be seen from the above description that, the motion of the plate 200 mainly relies on a matching relation between the trigger lever 301 and the lock arms 403, that is, the lock arm 403 drives the trigger lever 301 to move and the trigger level 301 is capable of driving the plate 200 to move. In order to make the rotation of the plate 200 relative to the base 100 more stable, optionally, the free end 402 of the locking mechanism 400 is hinged to the plate 200 through a pin shaft 501. For example, as shown in Fig. 1, when the first lock arm drives the plate 200 to overturn to the right relative to the base 100, a right side of the plate 200 is hinged to the free end of the second lock arm, and thus, a more stable rotation effect is able to be achieved.

In order to make the user save more effort when opening/closing the plate 200, optionally, as shown in Fig. 4, the bidirectional opening/closing device includes an auxiliary mechanism, the auxiliary mechanism includes booster torsion springs 502 sleeved on the pin shafts 501, and the booster torsion springs 502 are configured to enable the plate 200 to rotate around the pin shafts 501. That is, once the trigger mechanism 300 drives one of the locking mechanisms 400 to be separated from the base 100, the booster torsion spring 502 drives the plate 200 to rotate around the pin shaft 501, and the user does not need to manually overturn the plate 200.

In addition, in order to prevent the plate 200 from causing harm to other components or the user due to excessive movement in an overturning process, optionally, the auxiliary mechanism includes dampers 503 configured to limit a rotation speed of the plate 200 around the pin shafts 501.

In particular, the pin shaft 501 has a first tooth part, and the damper 503 has a second tooth part engaged with the first tooth part.

It should be understood that, the damper 503 may be any one of dampers in the prior art, as long as it is able to be matched with the pin shaft 501 to limit an overturning speed of the plate 200.

It can be seen that, the bidirectional opening/closing device of the disclosure is capable of being applied to various fields, such as doors, windows, cabinets, etc. In addition, the disclosure further provides an armrest box. The armrest box includes a box body, a box cover and the above bidirectional opening/closing device. The base 100 is arranged on the box body, and the box cover is arranged on the plate 200. The armrest box of the disclosure uses the above bidirectional opening/closing device, and thus the bidirectional opening/closing function of the box cover of the armrest box is realized.

In some examples of the disclosure, in particular, the box body is the base 100 and the box cover is the plate 200.

In addition, the disclosure further provides a vehicle. The vehicle is provided with the above armrest box.

The vehicle has the same advantages as the above bidirectional opening/closing device and armrest box compared with the prior art, and repeated description will not be made here.

## Claims

1. An armrest box comprising a box body, a box cover and a bidirectional opening/closing device, wherein the bidirectional opening/closing device comprises a base (100), a plate (200), a trigger mechanism (300), and two locking mechanisms (400); wherein
each locking mechanism (400) comprises a lock arm (403) with a hinged end (401) and a free end (402), the lock arm (403) is installed on the base (100) by means of the hinged end (401), the lock arm (403) and the base (100) are capable of being locked or unlocked, and the lock arm (403) is capable of rotating around the hinged end (401) when the lack arm (403) and the base (100) are unlocked; wherein
the two lock arms (403) are arranged symmetrically and in parallel, and the free ends (402) of the two lock arms (403) face opposite directions, such that the two lock arms (403) have opposite directions of rotation; and
the trigger mechanism (300) is installed on the plate (200), and the trigger mechanism (300) is capable of selectively unlock one of the lock arms (403) from the base (100), such that the lock arm (403) is capable of driving the plate (200) to rotate around the hinged end (401) of the lock arm (403),
wherein each locking mechanism (400) comprises a lock hook (404), one end of the lock hook (404) is installed in a cavity of the lock arm (403), and the other end extends out of the lock arm (403) to be matched with a locking part (101) of the base (100); and
the trigger mechanism (300) comprises a trigger lever (301), the trigger lever (301) is installed on the plate (200), and the trigger lever (301) is capable of moving in a first direction to extend into the cavity of the lock arm (403) so as to drive the lock hook (404) to be separated from the locking part (101),
**characterized in that** wherein the trigger lever (301) has a step part (3012), the trigger mechanism (300) comprises a stopping unit, and the stopping unit has a stopping end (3051) that is capable of abutting against the step part (3012) to limit the trigger lever (301) from moving.

2. The armrest box according to claim 1, wherein the trigger mechanism (300) comprises a switch lever (302) installed on the plate (200), the switch lever (302) is provided with a guide groove (3021), the trigger lever (301) is provided with a convex column (3011) adapted to the guide groove (3021), and the switch lever (302) is capable of moving and driving the trigger lever (301) to move in the first direction.

3. The armrest box according to claim 1, wherein the stopping unit comprises a stopping piece (305), the stopping piece (305) has the stopping end (3051), and the stopping piece (305) is hinged to the plate (200) and is capable of rotating around a second direction perpendicular to the first direction so as to abut against or be separated from the step part (3012) of the trigger lever (301).

4. The armrest box according to claim 1, wherein the lock hook (404) is hinged to the lock arm (403) so that when the trigger lever (301) pushes one end of the lock hook (404), the other end of the lock hook (404) is separated from the locking part (101); and/or,
the plate (200) comprises a limiting structure (201) configured to guide the trigger lever (301) to move in the first direction.

5. The armrest box according to any one of claims 1-4, wherein the free end (402) of each locking mechanism (400) is hinged to the plate (200) through a pin shaft (501).

6. The armrest box according to any one of claims 1-5, wherein the base (100) is arranged on the box body, and the box cover is arranged on the plate (200).

7. The armrest box according to claim 6, wherein the box body is the base (100), and the box cover is the plate (200).

8. A vehicle, wherein the vehicle is provided with the armrest box according to any one of claims 1 to 7.

## Patentansprüche

1. Armlehnenkasten umfassend einen Kastenkörper, einen Kastendeckel und eine bidirektionalen Öffnungs-/Schließvorrichtung, wobei die bidirektionale Öffnungs-/Schließvorrichtung eine Basis (100), eine Platte (200), einen Auslösemechanismus (300) und zwei Verriegelungsmechanismen (400) umfasst; wobei
jeder Verriegelungsmechanismus (400) einen Verriegelungsarm (403) mit einem angelenkten Ende (401) und einem freien Ende (402) umfasst, der Verriegelungsarm (403) mittels des angelenkten Endes (401) an der Basis (100) installiert ist, der Verriegelungsarm (403) und die Basis (100) in der Lage sind, verriegelt oder entriegelt zu werden, und der Verriegelungsarm (403) in der Lage ist, sich um das angelenkte Ende (401) zu drehen, wenn der Verriegelungsarm (403) und die Basis (100) entriegelt sind; wobei
die beiden Verriegelungsarme (403) symmetrisch und parallel angeordnet sind, und die freien Enden (402) der beiden Verriegelungsarme (403) in entgegengesetzte Richtungen weisen, so dass die beiden Verriegelungsarme (403) entgegengesetzte Drehrichtungen haben; und
der Auslösemechanismus (300) an der Platte (200) installiert ist und der Auslösemechanismus (300) in der Lage ist, einen der Verriegelungsarme (403) selektiv von der Basis (100) zu entriegeln, so dass der Verriegelungsarm (403) in der Lage ist, die Platte (200) anzutreiben, um sich um das angelenkte Ende (401) des Verriegelungsarms (403) zu drehen,
wobei jeder Verriegelungsmechanismus (400) einen Verriegelungshaken (404) umfasst, ein Ende des Verriegelungshakens (404) in einem Hohlraum des Verriegelungsarms (403) installiert ist und das andere Ende sich aus dem Verriegelungsarm (403) heraus erstreckt, um mit einem Verriegelungsteil (101) der Basis (100) zusammenzupassen; und
der Auslösemechanismus (300) einen Auslösehebel (301) umfasst, der Auslösehebel (301) auf der Platte (200) installiert ist und der Auslösehebel (301) in der Lage ist, sich in eine erste Richtung zu bewegen, um sich in den Hohlraum des Verriegelungsarms (403) zu erstrecken, um den Verriegelungshaken (404) anzutreiben, um von dem Verriegelungsteil (101) getrennt zu werden,
**dadurch gekennzeichnet, dass** der Auslösehebel (301) einen Stufenteil (3012) aufweist, der Auslösemechanismus (300) eine Stoppeinheit umfasst und die Stoppeinheit ein Stoppende (3051) aufweist, das in der Lage ist, gegen den Stufenteil (3012) zu stoßen, um die Bewegung des Auslösehebels (301) zu begrenzen.

2. Armlehnenkasten nach Anspruch 1, wobei der Auslösemechanismus (300) einen Schalthebel (302) umfasst, der auf der Platte (200) installiert ist, der Schalthebel (302) mit einer Führungsnut (3021) versehen ist, der Auslösehebel (301) mit einer konvexen Säule (3011) versehen ist, die an die Führungsnut (3021) angepasst ist, und der Schalthebel (302) in der Lage ist, sich zu bewegen und den Auslösehebel (301) anzutreiben, um sich in die erste Richtung zu bewegen.

3. Armlehnenkasten nach Anspruch 1, wobei die Stoppeinheit ein Stoppstück (305) umfasst, das Stoppstück (305) das Stoppende (3051) aufweist und das Stoppstück (305) an der Platte (200) angelenkt ist und sich um eine zweite Richtung senkrecht zur ersten Richtung drehen kann, so dass es an dem Stufenteil (3012) des Auslösehebels (301) anliegt oder von diesem getrennt wird.

4. Armlehnenkasten nach Anspruch 1, wobei der Verriegelungshaken (404) an dem Verriegelungsarm (403) angelenkt ist, so dass, wenn der Auslösehebel (301) ein Ende des Verriegelungshakens (404) drückt, das andere Ende des Verriegelungshakens (404) von dem Verriegelungsteil (101) getrennt wird; und/oder,
die Platte (200) eine Begrenzungsstruktur (201) umfasst, die so konfiguriert ist, dass sie den Auslösehebel (301) so führt, dass er sich in die erste Richtung bewegt.

5. Armlehnenkasten nach einem der Ansprüche 1 bis 4, wobei das freie Ende (402) jedes Verriegelungsmechanismus (400) über einen Stiftschaft (501) an der Platte (200) angelenkt ist.

6. Armlehnenkasten nach einem der Ansprüche 1 bis 5, wobei die Basis (100) auf dem Kastenkörper und der Kastendeckel auf der Platte (200) angeordnet ist.

7. Armlehnenkasten nach Anspruch 6, wobei der Kastenkörper die Basis (100) und der Kastendeckel die Platte (200) ist.

8. Fahrzeug, wobei das Fahrzeug mit dem Armlehnenkasten nach einem der Ansprüche 1 bis 7 ausgestattet ist.

## Revendications

1. Boîte d'accoudoir, comprenant un corps de boîte, un couvercle de boîte, et un dispositif d'ouverture/fermeture bidirectionnel, dans laquelle le dispositif d'ouverture/fermeture bidirectionnel comprend une base (100), une plaque (200), un mécanisme de déclenchement (300), et deux mécanismes de verrouillage (400), dans laquelle :
chaque mécanisme de verrouillage (400) comprend un bras de verrou (403) doté d'une extrémité articulée (401) et d'une extrémité libre (402), le bras de verrou (403) est installé sur la base (100) par le biais de l'extrémité articulée (401), le bras de verrou (403) et la base (100) peuvent être verrouillés ou déverrouillés, et le bras de verrou (403) peut tourner autour de l'extrémité articulée (401) lorsque le bras de verrou (403) et la base (100) sont déverrouillés, dans laquelle
les deux bras de verrou (403) sont agencés symétriquement et parallèlement, et les extrémités libres (402) des deux bras de verrou (403) sont orientés dans des directions opposées, de telle sorte que les deux bras de verrou (403) présentent des directions de rotation opposées, et
le mécanisme de déclenchement (300) est installé sur la plaque (200), et le mécanisme de déclenchement (300) peut déverrouiller de manière sélective un des bras de verrou (403) de la base (100), de telle sorte que le bras de verrou (403) peut entraîner la plaque (200) en rotation autour de l'extrémité articulée (401) du bras de verrou (403) ;
dans lequel chaque mécanisme de verrouillage (400) comprend un verrouillage à crochet (404), une extrémité du verrouillage à crochet (404) est installée dans une cavité du bras de verrou (403), et l'autre extrémité s'étend hors du bras de verrou (403) pour coïncider avec une partie de verrouillage (101) de la base (100), et
le mécanisme de déclenchement (300) comprend un levier de déclenchement (301), le levier de déclenchement (301) est installé sur la plaque (200), et le levier de déclenchement (301) peut se déplacer dans une première direction pour s'étendre dans la cavité du bras de verrouillage (403) de manière à entraîner le verrouillage à crochet (404) pour qu'il se sépare de la partie de verrouillage (101),
**caractérisée en ce que** le levier de déclenchement (301) présente une partie à gradins (3012), le mécanisme de déclenchement (300) comprend une unité d'arrêt, et l'unité d'arrêt présente une extrémité d'arrêt (3051), laquelle peut abouter contre la partie à gradins (3012) pour limiter le déplacement du levier de déclenchement (301).

2. Boîte d'accoudoir selon la revendication 1, dans laquelle le mécanisme de déclenchement (300) comprend un levier d'interrupteur (302) installé sur la plaque (200) ; le levier d'interrupteur (302) est doté d'une rainure de guidage (3021) ; le levier de déclenchement (301) est doté d'une colonne convexe (3011) adaptée à la rainure de guidage (3021), et le levier d'interrupteur (302) peut se déplacer et entraîner le levier de déclenchement (301) pour un déplacement dans la première direction.

3. Boîte d'accoudoir selon la revendication 1, dans laquelle l'unité d'arrêt comprend une pièce d'arrêt (305), la pièce d'arrêt (305) présente une extrémité d'arrêt (3051), et la pièce d'arrêt (305) est articulée avec la plaque (200) et peut tourner autour d'une seconde direction perpendiculaire à la première direction de manière à abouter contre la partie à gradins (3012) du levier de déclenchement (301), ou à être séparée de celle-ci.

4. Boîte d'accoudoir selon la revendication 1, dans laquelle le verrouillage à crochet (404) est articulé avec le bras de verrou (403) de manière à ce que le levier de déclenchement (301) pousse une extrémité du verrouillage à crochet (404), et l'autre extrémité du verrouillage à crochet (404) est séparée de la partie de verrouillage (101), et/ou
la plaque (200) comprend une structure de limitation (201) configurée pour guider le levier de déclenchement (301) pour qu'il se déplace dans la première direction.

5. Boîte d'accoudoir selon l'une quelconque des revendications 1 à 4, dans laquelle l'extrémité libre (402) de chaque mécanisme de verrouillage (400) est articulée avec la plaque (200) par le biais d'un axe de broche (501).

6. Boîte d'accoudoir selon l'une quelconque des revendications 1 à 5, dans laquelle la base (100) est agencée sur le corps de boîte, et le couvercle de boîte est agencé sur la plaque (200).

7. Boîte d'accoudoir selon la revendication 6, dans laquelle le corps de boîte est la base (100), et le couvercle de boîte est la plaque (200).

8. Véhicule, dans lequel le véhicule est équipé de la boîte d'accoudoir selon l'une quelconque des revendications 1 à 7.
